# EUROPEAN PATENT APPLICATION

(11) **EP 2 410 475 A1**
(43) Date of publication of application: **25.01.2012**
(21) Application number: 10170392.4
(22) Date of filing: 22.07.2010
(51) Int. Cl.: G06Q 10/00

(54) **Route reporting system**

(71) Applicant: Deutsche Post AG, 53113 Bonn (DE)
(72) Inventor: Hoikkala, Henri, FI-20720 Turku (FI)
(74) Representative: Jostarndt, Hans-Dieter

(57) **Abstract**

The invention relates to an efficient route reporting system (1) for accounting purposes suitable to automatically recognize the actually driven route, where the route reporting system (1) for logistic providers for supporting payments to transport services transporting objects along an intended transport route (2) with transport vehicles (3) to or from customer addresses (C1, C2) comprising a sending device (4) arranged in the transport vehicle (3) suitable to send-out (S) characteristic data (D) about the actually driven transport route (5), a receiving system (6) suitable to receive the characteristic data (D) from the sending device (4), a computer system (7) connected to the receiving system (6) suitable to determine at least one characteristic parameter (PI) of the intended transport route (2) in accordance to the customers addresses (C1, C2) and given first criteria (CF) and to calculated at least the corresponding characteristic parameter (PA) of the actually driven transport route (5) from the received characteristic data (D), and an accounting system (8) connected to the computer system (7) to receive the at least one characteristic parameters (PI, PA) or its comparison of the intended transport route (2) and the actually driven transport route (5) from the computer system (7), wherein the accounting system (8) is suitable to decide upon a comparison of the at least one characteristic parameters (PI, PA) and given second criteria (CS), which payment mode has to be used for paying the transport service. The invention further relates to a navigation device (9) comprising the sending device (4) and to a method to operate such a system (1).

## Description

### Filed of the invention

The invention relates to a route reporting system, a navigation device used in the route reporting system and a method to operate the route reporting system.

### Background of the invention

The use of navigation devices increased substantially in the last years to guide drivers to their destinations. Transport vehicles of transport companies are usually equipped with navigation devices supporting the driver to follow the shortest or fastest route in order to deliver the transported objects to a recipient, especially for routes with multiple destinations to be reached in a certain sequence.

WO 2010/006726 A1 discloses a system to optimize the route planning for a multi-stop route having a plurality of intermediate stops. Here, a central server device receives a plurality of address data via a data network, determines navigation data corresponding to the address data and transmits the navigation data to a navigation device present in the transport vehicle scheduled for this route. The navigation data comprise the start location, the end location and a determined sequence of intermediate stops according to a certain route criteria defined by a user of the system, e.g. fastest route, shortest route or most economical route. The navigation device is suitable to guide the driver to the next destination within the multiple-stop route and to automatically calculating the route to the following destination after arriving at the current destination. Courier services are usually paid in accordance to the length of the route. However, the route may deviate from the calculated multi-stop route due to several possible reasons, e.g. unexpected heavy traffic or traffic jam, road closures, road works etc. There is a demand to know the driven route in addition to the calculated length of the route and a simple system taking these deviations into account for paying the transport service.

### Summary of the invention

It is an object of the invention to provide an efficient route reporting system for accounting purposes suitable to automatically recognize the actually driven route.

The object is solved by a route reporting system for logistic providers for supporting payments to transport services transporting objects along an intended transport route with transport vehicles to or from customers addresses comprising a sending device arranged in the transport vehicle suitable to send-out characteristic data about the actually driven transport route, a receiving system suitable to receive the characteristic data from the sending device, a computer system connected to the receiving system suitable to determine at least one characteristic parameter of the intended transport route in accordance to the customer addresses and given first criteria and to calculated at least the corresponding characteristic parameter of the actually driven transport route from the received characteristic data, and an accounting system connected to the computer system to receive the at least one characteristic parameters or its comparison of the intended transport route and the actually driven transport route from the computer system, wherein the accounting system is suitable to decide upon a comparison of the at least one characteristic parameters and given second criteria, which payment mode has to be used for paying the transport service.

The term "logistic provider" denotes any company distributing/transporting objects from a sender to a recipient or from a starting point to a destination. Accordingly the customer addresses are the addresses of the sender, the recipient, the starting point of a transport route or the destination for the transport vehicle. The objects may be any kind of objects not limited to any particular size, weight or content. Alternatively the object may by persons or animals. The transport service denotes a service provider executing the transport of objects for the logistic provider. The transport service might by a separate company ordered by the logistic provider or a subunit of the logistic provider. The term "transport vehicle" denotes any kind of vehicles suitable to be loaded with objects to be transported from one place to another place. As an example, a transport vehicle might be a truck, a bus, a car, a wagon, a bicycle, an aircraft or any other suitable vehicle. The transport route is a sequence of destinations (customer addresses) from a starting point to a final destination (e.g. last address on a list of addresses to be delivered or the starting point itself in case of a circular route). The term "customer" denotes any person, any company or any other legal entity receiving either a transported object (customer = recipient) or a service. As an example "receiving a service" may denotes the service for the person to pick up an object at a certain address specified by this person. Here the customer is the sender of an object.

The sending device is a device suitable to send-out characteristic data about the transport route, which either comprises the characteristic parameters itself or can be used to calculate the characteristic parameters. As an example, the sending device may send-out a position signal, which can be detected by a navigation system further determining the position in geographic coordinates (position data) from the signal to further transmit the position data to the receiving system or the sending device send-out the geographic coordinates of the actual position directly. The same applies for other characteristic data such as time data, where the time data may be part of the characteristic data or the time data are derived from the time, when the characteristic data are received from the receiving system. The characteristic data may comprise a set of data belonging to the actual position, the actual time etc. To obtain data suitable to record an actually driven route, the characteristic data have to be taken periodically. In one embodiment, the characteristic data are send-out by the sending device periodically with a certain send-out frequency. The sending device may comprise a data storage unit suitable to store characteristic data at least until the characteristic data are send-out to the receiving system. In another embodiment the characteristic data are determine periodically and are stored in the send-out device to send-out the characteristic data at an appropriate point of time. As an example this appropriate point of time may be the time, when the transport vehicle arrives at the destination or when the transport vehicle returns to a station of the transport service / logistic provider. The send-out frequency or the frequency for determining the characteristic data may depend on the data content, transport route and/or on the required accuracy for the characteristic parameters resulting from the characteristic data. As an example, position data (as an example of characteristic data) may be send-out/determined every minute, every 5 minutes, every 30 minutes, every hour or in case of send-out frequency only one times inside a station of the transport service or the logistic provider. In case of long distance routes, a longer time interval between send-out data (low send-out frequency) would be sufficient to obtain information about the transport vehicle along the transport route. The opposite would be the case for city couriers delivering objects over short distances or during short time periods. In an embodiment the characteristic data comprise at least one element of the group of position data, time data, velocity data, recreation intervals, transport vehicle parameter or transport object parameter. From the position data and the time data, the length and driving time can be calculated for the actually driven transport route. Here the velocity data correspond to the velocity of the transport vehicle. Recreation intervals may be of interest to check the adherence to eventually mandatory recreation intervals within transport routs e.g. of more than 10 hours. Also certain transport vehicle or object parameter (e.g. in case of a risk of deterioration of the transported objects) such as temperature within the loading volume and/or the ambient temperature could be recorded and send-out by the sending device.

The receiving system must be suitable to receive the send-out data. Common receiving systems for wireless information transfer are known by skilled people. The sending device may send-out the data as radio signals for wireless communication. Correspondingly the receiving system might be a WLAN system, a mobile cell phone system or any other radio signal receiving system. The connection to the computer system for further processing of the received data may be established by data cables or via a wireless data connection. The receiving system might be a receiving system suitable to receive data wireless via a short distance connection, e.g. when the characteristic data are send-out only one time after the transport vehicle arrived at a station of the transport service or the logistic provider. As an example, the receiving system may comprise a handheld receiving device able to receive the characteristic data from the sending device and to transfer the characteristic data via a data port connected to the computer system. In a preferred embodiment, the handheld receiving device may be suitable to trigger the sending-out of the characteristic data in order to guarantee a successful data transfer. The trigger may be a coded signal announcing the presence of a handheld receiving device to the sending device. Therefore the sending device may comprise a receiving unit able to receive data, e.g. the said coded signal. The receiving unit of the sending device may alternatively or simultaneously be used to receive other data, e.g. data to be added to the characteristic data.

The computer system may be any suitable system comprising a database and at least one installed program suitable to determine/calculate at least one characteristic parameter of the intended/actually driven transport route. Such a program might be a navigation program suitable to calculate the length of transport routes and the required time to drive along the calculated route. As an example the first criteria might be fastest route, shortest route, most economical route taking into account multiple sources of transport costs such as required fuel, road charges, ferry charges etc. As an alternative, the route reporting system is a web- system, preferably accessible via an internet portal. A web-system provides the possibility to be used from any computer worldwide connected to the internet resulting in a flexible use of the route reporting system. Therefore the computer system might be a server based web-system having access to applications installed on other servers in the internet suitable to calculate characteristic parameters and provide the results to the computer system. As an example characteristic parameters such as route length and driving time could be calculated with the map tools like Route66 or Map&Guide. The computer system is further suitable to calculate at least the corresponding characteristic parameter of the actually driven transport route from the received characteristic data. Depending on the format of the characteristic data, the computer system might be suitable to derive address data from the position data if present in geographic coordinates before calculating the same characteristic parameter (e.g. the length of the driven transport route) for later comparison. The conversion of position data into address data might be performed by applying digital maps. Alternatively, the transport route length could be derived directly from digital maps using the received position data as characteristic data using suitable maps and/or software available on the market, e.g. global mapper.

The accounting system may be any accounting system suitable to receive input parameters such as characteristic parameters. The accounting system may be a SAP-based accounting system. The second criteria may be defined in a look-up table stored in the computer system or in the accounting system specifying the accounting details (payment modes) depending on the result of the comparison of the characteristic parameters for intended and actually driven transport route. Here the comparison of the characteristic parameters may either be executed by the accounting system or by the computer system providing the result of the comparison to the accounting system. As an example of a payment mode, the look-up table may specify to pay a certain first amount of money per drive kilometer, if the length and/or time of the calculated transport is larger than for the actual driven transport route and to pay a second amount of money in the opposite case. Other payment modes may be related to driving times (duration, day or night etc.). The look-up table may comprise more alternatives of accounting details depending on the results of the comparison between both or more couples of characteristic parameters. The accounting system will be used at least for defining the payment mode to be used for paying the particular transport. As an example, the transport service may be paid per actually driver kilometer (or mile), as long as the drive kilometer does not exceed a certain maximum level (e.g. an upper limit of shortest distance plus 10 %). In this example, the system calculates firstly the length of the intended transport route from the recipient's addresses for this route, and secondly calculates the actually driven distance (length). The system compares both characteristic parameters, derives the difference between both parameters (length of actual driven route less than intended route plus 10%) and decides from the specified second criteria (condition fulfilled: yes / no) the payment scheme to be used (actually driven kilometers/miles or intended route plus 10%). The previous example is only one possibility to establish a payment based on the received characteristic parameters. People skilled in the art may choose other first and second criteria as well as other characteristic parameters to be compared in order to define a certain payment mode for the transport service, e.g. also depending on the particular transport service. The accounting system may be used in other embodiment also for establishing an amount of money to be paid to the transport service or to allocate for the transport service. In another embodiment the accounting system may be used for executing the payment to the transport service, which provides an automatic system handling all issues related to the transport service and therefore reduces the required administrative effort.

The system according to the present invention does not require input from the transport services to obtain the characteristic parameters (e.g. length or expected/required driving time), such as reporting the actually driven transport route (driven kilometers/miles derived from the tachometer of the transport vehicle or the start and stop times reported by the driver) by paper form, telephone call or e-mail. The system receives the characteristic data and processes the characteristic parameters automatically into a computer and/or accounting system, which reduces the required effort to operate such a system. The high manual effort to insert, check and process characteristic parameter reported by paper form, telephone call or e-mail could be avoided. Furthermore this system will prevent mistakes in the recording of the characteristic data/parameter compared to manual reporting. The automatically received characteristic parameters obtained without manual steps in between will be reliable and therefore avoids an otherwise required manual check procedure for the reported parameter.

In an embodiment the characteristic data comprise identification data identifying the particular transport vehicle and/or the transport route and/or the transport order and/or the transport service. The identification data can be used to assign the characteristic data and subsequently the characteristic parameters finally to a transport service to execute the payment for the transport service. The identification data specifying the transport vehicle, the transport route or the transport order can be used to identify the corresponding transport service. Such identification data will simplify the execution of payments. Identification data may be a string of data characteristic for a transport route and/or the transport order and/or the transport service. The string may comprise the transport route and/or the transport order and/or the transport service as text or coded text or might be a sequence of bits assigned to the transport route and/or the transport order and/or the transport service. People skilled in the art may choose appropriate identification data and its corresponding data format within the scope of this invention.

In another embodiment the sending device is integrated in a navigation device, which provides at least parts of the characteristic data to the sending device. The navigation device may be a modification/upgrade/add-on to a common navigation device, where a sending device is connected to/integrated in. The integration of navigation device and sending device allows to use the data obtained by the navigation device for the characteristic data, e.g. the geographic coordinates (position data) and the assigned address data provided by the navigation device may be send-out in the present format by the sending device. The advantageous of sending out data in the format of the navigation device is the possibility to further process the data as characteristic data with a corresponding navigation system installed on the computer system. The data provided by the navigation device may be the characteristic data or a part of the send-out characteristic data.

In another embodiment the navigation device is suitable to add additional data to the characteristic data send-out by the sending device, Such additional data may be additional information such as "arrived at destination", when the geographic data at the destination is send-out to the receiving system. Here the information content of the particular geographic data can be improved by particular additional information. Other added data may denote mandatory work breaks to explain constant geographical data or velocity data during a certain time period. The additional data may be used to improve the transport security via checking the adherence to mandatory work breaks to be taken. The format of the added data may be any suitable data format readable for the computer system connected to the receiving system. The added data may be characteristic data for determining/calculating characteristic parameters.

In another embodiment the route reporting system is suitable to distinguish between characteristic parameters received from transport vehicles with and without objects loaded to the transport vehicle. The status of the transport vehicle (loaded/unloaded) might be inserted as additional data (status data) to the characteristic data or might be send-out as separate data received by the receiving system (e.g. via a status button present at the sending device indicating the load/unload status of the transport vehicle). The computer system and/or the accounting system are suitable to recognize the status data of a transport vehicle. The status data might by characterized by identification data specifying the transport vehicle and/or the transport route and/or the transport order. This offers the use of addition accounting schemes for the accounting system.

The invention further relates to a navigation device for use in a route reporting system as claimed in present invention, characterized in that the navigation device comprises a sending device to send-out characteristic data about an actually driven transport route, where a transport service transports objects to or from customer addresses. The navigation device might be commercialized independently from the route reporting system, because the navigation device might be used for navigation purposes only even if it could be used in a route reporting system. However, the navigation device has to comprise the required hardware and/or software to be suitable for the route reporting system according to the present invention. The combination of two devices in one single device is easier to handle for users and provides a data synergy, because the data obtained and provided by the navigation device can be used for other purposes, e.g. send-out characteristic data to a route reporting system. The sending device is a device suitable to send-out characteristic data to be used to calculate the characteristic parameters. As an example, the sending device may send-out a position signal, which can be detected by a navigation system further determining the position in geographic coordinates (position data) from the signal to further transmit the position data to the receiving system or the sending device sends-out the geographic coordinates of the actual position directly. The same applies for other characteristic data such as time data, where the time data may be part of the characteristic data or the time data are derived from the time, when the characteristic data are received by the receiving system. The characteristic data may comprise a set of data belonging to the actual position, the actual time etc. In an embodiment the characteristic data comprise at least one element of the group of position data, time data, velocity data, recreation intervals, transport vehicle parameter or transport object parameter. From the position data and the time data, the length and driving time can be calculated for the actually driven transport route. Here the velocity data correspond to the velocity of eth transport vehicle. Recreation intervals may be of interest to check the adherence to eventually mandatory recreation intervals within transport routs e.g. of more than 10 hours. Also certain transport vehicle or object parameter (e.g. in case of a risk of deterioration of the transported objects) such as temperature within the loading volume and/or the ambient temperature could be recorded and send-out by the sending device. In a preferred embodiment the navigation device is suitable to add additional data to the characteristic data send-out by the sending device. The navigation device may comprise a suitable tool, e.g. a touch screen, to insert the additional data and/or to specify the kind of additional data to be added to the characteristic data. The kind of additional data to be added may be supported by a scroll-down list displayed in the touch screen to select the desired type of additional data to be added.

The invention further relates to a method to operate the route reporting system according to the present invention comprising the steps of
- defining an intended transport route for transport vehicles of transport services transporting objects to or from customer addresses in accordance to the customers addresses and given first criteria,
- sending out characteristic data along an actually driven transport route of the transport vehicles,
- receiving the characteristic data from the sending device with a receiving system,
- determining at least one characteristic parameter of the intended transport route and calculating at least the corresponding characteristic parameter of the actually driven transport route from the received characteristic data with a computer system connected to the receiving system,
- comparing the at least one characteristic parameters, and
- deciding with the accounting system upon the compared characteristic parameters and given second criteria, which payment mode has to be used for paying the transport service.

In an embodiment the method further comprises the step of adding identification data to the characteristic data identifying the particular transport vehicle and/or the transport route and/or the transport order and/or the transport service before sending out the characteristic data. The adding may be performed by inserting the identification data to the sending device, e.g. via a interface suitable to insert data (e.g. a key-board or a touch-screen), and subsequently adding the inserted identification data automatically to each send-out characteristic data. The inserting of identifier data enables a flexible use of the sending device for different transport vehicles, transport routes, transport orders, or the transport services.

In another embodiment the method further comprises the step of providing at least parts of the characteristic data to the sending device by a navigation device before sending out the characteristic data, where the sending device is integrated into the navigation device. The combination of two devices in one single device is easier to handle for users and provides a data synergy, because the data obtained and provided by the navigation device can be used for other purposes, e.g. send-out characteristic data.

In another embodiment the method further comprises the step of distinguishing between characteristic parameters received from transport vehicles with and without objects loaded to the transport vehicle. This offers the use of addition accounting schemes for the accounting system.

In another embodiment the step of deciding upon second criteria comprises the step of accessing a look-up table comprising the second criteria stored in the computer system or in the accounting system. A look-up table can be easily adapted to desired payment modes even by operators being no computer experts.

### Brief description of the drawings

These and other aspects of the invention will be apparent from and elucidated with reference to the embodiments described hereinafter.
- Fig.1:: an embodiment of a route reporting system according to the present invention.
- Fig.2:: intended transport route versus actually driven transport route.
- Fig.3:: an embodiment of a navigation device according to the present invention.
- Fig.4:: another embodiment of a route reporting system according to the present invention.
- Fig.5:: an embodiment of the method to operate the routing system according to the present invention.

### Detailed description of embodiments

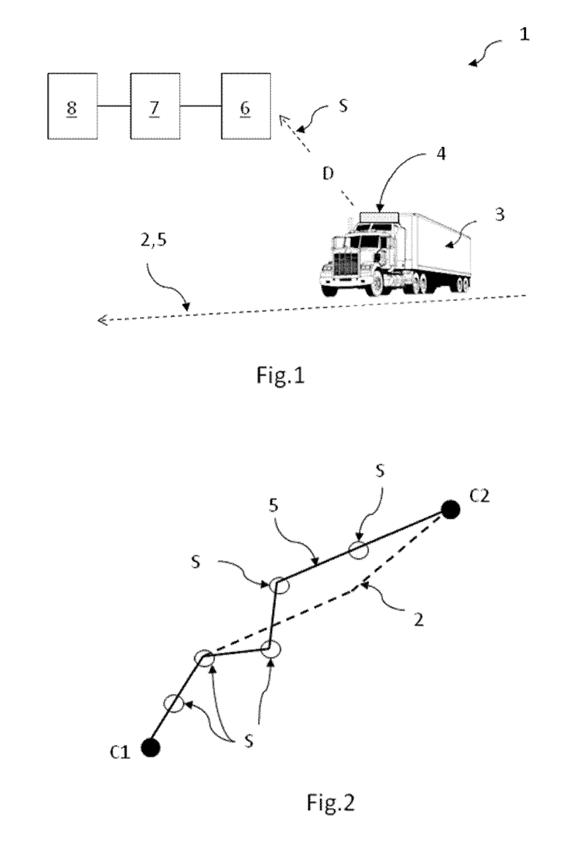

Fig.1 shows an embodiment of a route reporting system 1 according to the present invention. A truck 3 as the transport vehicle drives along an actually driven transport route 5, which could be identical to the intended transport route 2 (indicated by the dashed arrow). The truck 3 comprises a sending unit 4 indicated by the gray area. Alternatively the sending device 4 could be located on or in the truck 3 at any suitable location. Since transport vehicles 3 are usually equipped with navigation devices, the sending device 4 is preferably connected to such a navigation device in order to receive navigation data (such as position data, velocity data, time data) from the navigation device to be used as or for the characteristic data D send-out by the sending device 4. In a preferred embodiment the sending device 4 is integrated into the navigation device. The characteristic data are sent-out S periodically along the actually driven transport route 5 in this embodiment. The sending device 4 comprises a suitable sending unit to send out the characteristic data D in the required data format and with the required signal strength. Skilled people will be able to choose an appropriate sending unit for the sending device 4. As an example, the characteristic data D may comprise a coded signal indicating the particular transport vehicle 3 and the time data (from an internal clock), when the data were send-out. The coded signal can be detected via a navigation system and transferred into position data with corresponding time data. Alternatively the characteristic data may already comprise position data, e.g. GPS data received from a GPS unit as part of the sending device 4 or connected to the sending device 4 via a suitable data interface. The receiving system 6 receives the characteristic data D and transfers the received data to the computer system 7, where characteristic parameters are calculated from the received characteristic data. The receiving system 6 might be a satellite based receiving system with a wireless data connection to the computer system 7. Alternatively the receiving system 6 may use the mobile communication network to receive the characteristic data D from the sending device 4 via a corresponding mobile phone connection. In other embodiments the receiving system 6 may use present WLAN networks, e.g. for transport vehicles 3 operating in cities with a sufficient WLAN coverage. The computer system 7 connected to the receiving system 6 is also connected to an accounting system 8 to transfer the determined and calculated characteristic parameters to the accounting system 8 in order to decide about the appropriate payment mode to pay the transport service.

Fig.2 shows an example of an intended transport route 2 (dashed line) and the actually driven transport route 5 between two customer addresses C1, C2 (e.g. the start address and the address of the final destination of the transport vehicle), where the sending device of the transport vehicle (not shown in details) sends-out S characteristic data at multiple points (indicated with circle) along the actually driven transport route 5. From the characteristic data D, e.g. position data, the actually driven transport route 5 can be calculated, e.g. by automatically inserting address data assigned to the position data in a navigation system running on the computer system, which calculates the actually drive distance. With these data, the difference of driven kilometers/miles between the intended transport route 2 and the actually driven transport route 5 can be calculated and used for deciding about the payment mode used for the payments to the transport service. The length of a transport route is only one example of characteristic parameters to be compared for intended and actually driven transport routes. Other suitable characteristic parameters could be for example driving time (time data), driving speed (velocity data), stop times and working hours (recreation intervals).

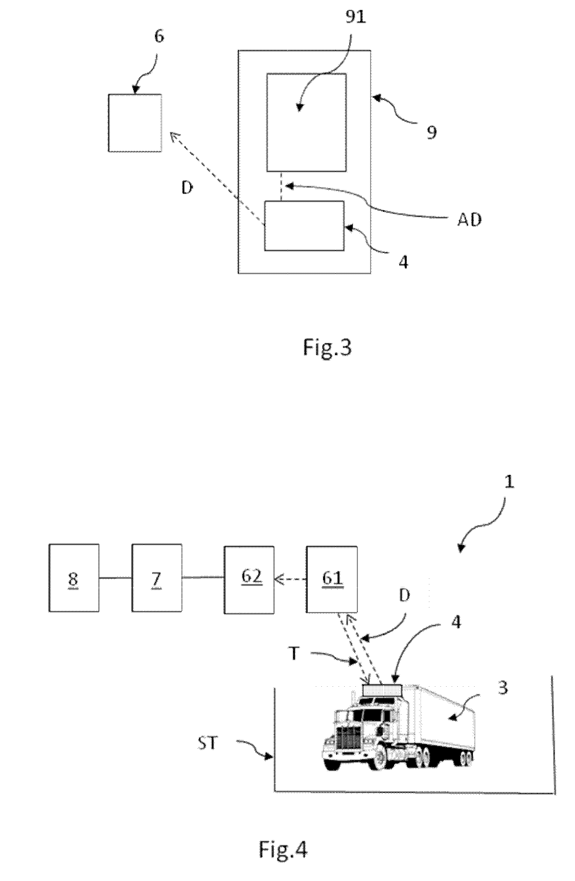

Fig.3 shows an embodiment of a navigation device 9 according to the present invention comprising the sending device 4. If the sending device 4 is integrated into the navigation device 9, the sending device 4 has access to several data which could be used as characteristic data D to calculate the actually driven transport route 5. A common navigation device uses position data for navigating a transport vehicle, where such navigation devices also derive velocity data from the position data. Common navigation devices also comprise internal clocks for providing time data. The unit of such navigation device to receive the required signals from the navigation satellites might be used in the navigation device 9 according to the present invention also to send-out the characteristic data D as the sending unit 4 to the receiving device 6. The navigation device 9 may comprise a chip organizing the data transfer from navigation data into characteristic data D required to operate the route reporting system 1 and therefore which provides at least parts of the characteristic data D to the sending device 4. The navigation device 9 is suitable to enter data via a touch screen 91 to the navigation device 9. The navigation device 9 simultaneously provides the possibility to add additional data AD to the characteristic data D to be send-out by the sending device 4. The additional data AD could be any suitable data, e.g. identification data ID identifying the particular transport vehicle 3 and/or the transport route 2, 5 and/or the transport order and/or the transport service. Other data added via the touch screen might be data about the arrival at a destination, explanations of route changes, indicating a certain time interval as a recreation interval or other data.

Fig.4 shows another embodiment of a route reporting system 1 according to the present invention, where the sending device 4 arranged in or at a truck 3 sends-out characteristic data D in a station ST of the transport service or the logistic provider to a handheld receiving device 61 as part of the receiving system 6. The handheld receiving device 61 in this embodiment triggers T the sending device 4 to send-out the characteristic data D stored along the actually driven transport route 5 in the sending device 4 comprising a suitable storage unit with a suitable storage capacity. People skilled in the art will choose suitable storage units within the scope of this invention. This procedure guarantees, that the sending-out may only be performed, when a handheld receiving device 61 is located within a range suitable for successfully transferring the characteristic data D to the handheld receiving device 61. The handheld receiving device 61 comprises a storage unit (e.g. a flash memory card) to store the received characteristic data D. The received characteristic data D might be transferred to the computer system 7 via a data port 62 as part of the receiving system 6, where the handheld receiving device 61 (or its storage unit) is inserted. Alternatively, the characteristic data D might be transferred wireless to the computer system 7. The further data processing will be executed as described for figure 1.

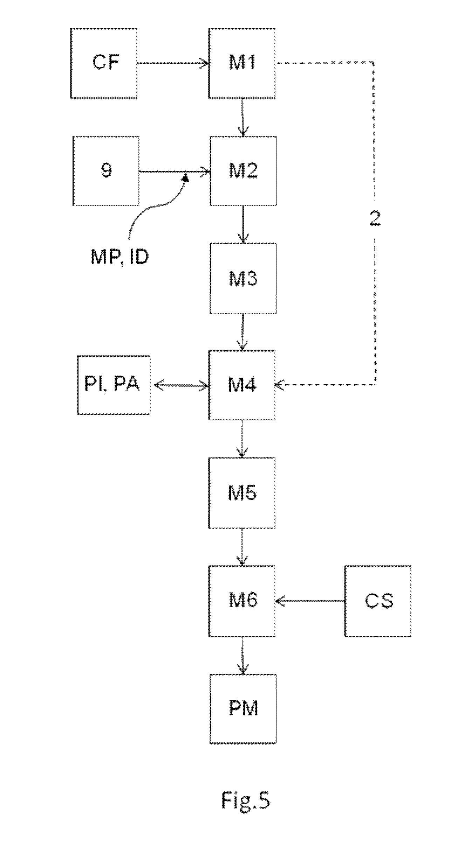

Fig.5 shows an embodiment of the method to operate the routing system 1 according to the present invention comprising the steps of defining M1 an intended transport route 2 for transport vehicles 3 of transport services transporting objects to or from customer addresses C1, C2 in accordance to the customers addresses C1, C2 and given first criteria CF (e.g. fastest route, shortest route, most economical route), sending out M2 characteristic data D along an actually driven transport route 5 of the transport vehicles 3, receiving M3 the characteristic data D from the sending device 4 with a receiving system 6, determining M4 at least one characteristic parameter PI of the intended transport route 2 (route data taken from the step M1, as indicated by the dashed arrow) and calculating at least the corresponding characteristic parameter PA of the actually driven transport route 5 from the received characteristic data D with a computer system 7 (indicated by the box PI, PA) connected to the receiving system 6, comparing M5 the at least one characteristic parameters PI, PA (comparison executed either by the computer system or by the accounting system), and deciding M6 with the accounting system 8 upon the compared characteristic parameters PI, PA and given second criteria CS, which payment mode PI, PA has to be used for paying the transport service. The second criteria CS may be stored in a look-up table accessible via the computer system 7 or via the accounting system 8. At least parts of the characteristic data D might be provided MP to the sending device 4 by a navigation device 9 before sending out M2 the characteristic data D. The achieve a reliable providing of data MP, the sending device 4 is integrated into the navigation device 9. In an embodiment the characteristic data D comprise identification data ID identifying the particular transport vehicle 3 and/or the transport route 2,5 and/or the transport order and/or the transport service, which can be added to the characteristic data D within the step of providing MPP at least parts of the data for the characteristic data D.

While the invention has been illustrated and described in details in the drawings and foregoing description, such illustration and description are to be considered illustrative or exemplary and not restrictive; the invention is not limited to the disclosed embodiments.

Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage. Any reference sign in the claims should not be construed as limiting the scope.

### List of numerals

- 1: route reporting system according to the present invention
- 2: intended transport route
- 3: transport vehicle
- 4: sending device
- 5: actually driven transport route
- 6: receiving system
- 61: handheld receiving device
- 62: data port for the handheld receiving device
- 7: computer system
- 8: accounting system
- 9: navigation device
- 91: display of the navigation device
- C1, C2: customer addresses
- CF: first criteria
- CS: second criteria
- D: characteristic data
- ID: identification data
- AD: additional data
- S: sending-out the characteristic data
- PI: characteristic parameter of the intended transport route
- PA: characteristic parameter of the actually driven transport route
- M1: defining step
- M2: sending-out step
- M3: receiving step
- M4: determining step
- M5: comparing step
- M6: deciding step
- MP: providing step
- T: triggering the sending-out step of the sending device
- ST: station of the transport service or the logistic provider

## Claims

1. A route reporting system (1) for logistic providers for supporting payments to transport services transporting objects along an intended transport route (2) with transport vehicles (3) to or from customer addresses (C1, C2) comprising a sending device (4) arranged in the transport vehicle (3) suitable to send-out (S) characteristic data (D) about the actually driven transport route (5), a receiving system (6) suitable to receive the characteristic data (D) from the sending device (4), a computer system (7) connected to the receiving system (6) suitable to determine at least one characteristic parameter (PI) of the intended transport route (2) in accordance to the customer addresses (C1, C2) and given first criteria (CF) and to calculated at least the corresponding characteristic parameter (PA) of the actually driven transport route (5) from the received characteristic data (D), and an accounting system (8) connected to the computer system (7) to receive the at least one characteristic parameters (PI, PA) or its comparison of the intended transport route (2) and the actually driven transport route (5) from the computer system (7), wherein the accounting system (8) is suitable to decide upon a comparison of the at least one characteristic parameters (PI, PA) and given second criteria (CS), which payment mode has to be used for paying the transport service.

2. The route reporting system (1) as claimed in claim 1, **characterized in that** the characteristic data (D) comprise at least one element of the group of position data, time data, velocity data, recreation intervals, transport vehicle parameter or transport object parameter.

3. The route reporting system (1) as claimed in claim 1 or 2, **characterized in that** the characteristic data (D) comprise identification data (ID) identifying the particular transport vehicle (3) and/or the transport route (2,5) and/or the transport order and/or the transport service.

4. The route reporting system (1) as claimed in any of the preceding claims, **characterized in that** the sending device (4) is integrated in a navigation device (9), which provides at least parts of the characteristic data (D) to the sending device (4).

5. The route reporting system (1) as claimed in claim 4, **characterized in that** the navigation device (9) is suitable to add additional data (AD) to the characteristic data (D) send-out by the sending device (4).

6. The route reporting system (1) as claimed in any of the preceding claims, **characterized in that** the route reporting system (1) is suitable to distinguish between characteristic parameters (PI, PA) received from transport vehicles (3) with and without objects loaded to the transport vehicle (3).

7. The route reporting system (1) as claimed in any of the preceding claims, **characterized in that** the second criteria (CS) are listed in at least one look-up table stored in the computer system (7) or in the accounting system (8).

8. The route reporting system (1) as claimed in any of the preceding claims, **characterized in that** the route reporting system (1) is a web- system, preferably accessible via an internet portal.

9. A navigation device (9) for use in a route reporting system (1) as claimed in claim 1, **characterized in that** the navigation device (9) comprises a sending device (4) to send-out (S) characteristic data (D) about an actually driven transport route (5), where a transport service transports objects to or from customer addresses (C1, C2).

10. The navigation device (9) as claimed in claim 9, **characterized in that** the navigation device (9) is suitable to add additional data (AD) to the characteristic data (D) send-out (S) by the sending device (4).

11. A method to operate the route reporting system (1) as claimed in claim 1 comprising the steps of
- defining (M1) an intended transport route (2) for transport vehicles (3) of transport services transporting objects to or from customer addresses (C1, C2) in accordance to the customers addresses (C1, C2) and given first criteria (CF),
- sending out (M2) characteristic data (D) along an actually driven transport route (5) of the transport vehicles (3),
- receiving (M3) the characteristic data (D) from the sending device (4) with a receiving system (6),
- determining (M4) at least one characteristic parameter (PI) of the intended transport route (2) and calculating at least the corresponding characteristic parameter (PA) of the actually driven transport route (5) from the received characteristic data (D) with a computer system (7) connected to the receiving system (6),
- comparing (M5) the at least one characteristic parameters (PI, PA), and
- deciding (M6) with the accounting system (8) upon the compared characteristic parameters (PI, PA) and given second criteria (CS), which payment mode (PI, PA) has to be used for paying the transport service.

12. The method as claimed in claim 11, further comprising the step of adding identification data (ID) to the characteristic data (D) identifying the particular transport vehicle (3) and/or the transport route (2, 5) and/or the transport order and/or the transport service before sending out (S) the characteristic data (D).

13. The method as claimed in claim 11 or 12, further comprising the step of providing (MP) at least parts of the characteristic data (D) to the sending device (4) by a navigation device (9) before sending out (S) the characteristic data (D), where the sending device (4) is integrated into the navigation device (9).

14. The method as claimed in any of claims 11 to 13, further comprising the step of distinguishing between characteristic parameters (PI, PA) received from transport vehicles (3) with and without objects loaded to the transport vehicle (3).

15. The method as claimed in any of claims 11 to 14, **characterized in that** the step of deciding (M6) upon second criteria comprises the step of accessing a look-up table comprising the second criteria (CS) stored in the computer system (7) or in the accounting system (8).
